# EUROPEAN PATENT APPLICATION

(11) **EP 1 914 517 A1**
(43) Date of publication of application: **23.04.2008**
(21) Application number: 07020045.6
(22) Date of filing: 12.10.2007
(51) Int. Cl.: G01C 21/36, B60R 11/02

(54) **Navigation apparatus**

(30) Priority: 18.10.2006 JP 2006284164
(71) Applicant: Funai Electric Co., Ltd., Daito-shi, Osaka 574-0031 (JP)
(72) Inventor: Tanaka, Hiroto, Daito-shi Osaka 574-0013 (JP); Yamada, Haruki, Daito-shi Osaka 574-0013 (JP)
(74) Representative: Grünecker, Kinkeldey, Stockmair & Schwanhäusser Anwaltssozietät

(57) **Abstract**

Disclosed is a portable navigation apparatus which positions a current position to display the position on a display section, including: an apparatus main body part in which the display section is disposed on a front side thereof; a planate GPS antenna section which is provided at an upper end of the apparatus main body part so as to be freely revolvable to receive a GPS signal transmitted from a GPS satellite; and an elevation angle adjusting mechanism which adjusts an elevation angle of the GPS antenna section, wherein the GPS antenna section is configured to switch between a state in which an entire display screen of the display section is exposed and covered, by revolving the GPS antenna section, and the GPS antenna section is freely slidable in a front and a back direction, being substantially perpendicular to the display screen of the display section.

## Description

### BACKGROUND OF THE INVENTION

### 1. Field of the Invention

The present invention relates to a navigation apparatus.

### 2. Description of Related Art

A navigation apparatus has conventionally been known. The known navigation apparatus is installed in a vehicle or the like, and positions the current position of the vehicle or the like with the use of a global positioning system (GPS) or the like to display the positioned current position of the vehicle or the like together with map information on a display screen.

One of the navigation apparatuses installed in a vehicle is a portable navigation apparatus capable of being also used on the outside of the vehicle.

In a case that a portable navigation apparatus is taken out of a vehicle to carry the navigation apparatus in, for example, a bag, when a display screen is not protected, there is the problem of the possibility of damaging the display screen, or the like. On the other hand, when the navigation apparatus is put into a sack in order to protect the display screen, the problem in which the sack interferes with the navigation apparatus at the time of the use thereof, or the like, is caused.

Accordingly, for example, the following navigation apparatus were proposed. In one of them an openable and closable cover is provided in the apparatus main body and a display screen is disposed in each of the apparatus main body and the cover, and it is possible to protect the display screen by closing the cover (see, for example, Japanese Patent Application Laid-Open Publication No. 2005-134151). In another of them, the apparatus main body is formed by a plurality of implement bodies coupled with one another in a foldable state, and by folding an implement body in which a display screen is disposed on another implement body in which inputting keys are mounted, it is possible to protect the display screen with the implement body in which the inputting keys are mounted (see, for example, Japanese Patent Application Laid-Open Publication No. 9-145385).

Furthermore, the following configurations are also conceivable. In one of the configurations, a display screen is protected with a couple of U-shaped GPS antennas, for example, like a television receiver. In a television receiver, a couple of U-shaped antennas are attached on the upper and lower surfaces of a housing and sandwich a display screen which is disposed on the front side of the housing. Further, the antennas are attached to the surfaces to be able to be folded from the upper and the lower surfaces to the front side of the housing and to be reversely expanded (see, for example, Japanese Patent Application Laid-Open Publication No. 2005-217895).

Moreover, in another configuration, a display screen is protected with a GPS antenna unit by providing a base supporting a GPS antenna unit, by providing a foldable base to a navigation apparatus main body part, and by providing coupling means for coupling these bases in a state of being freely attachable and detachable and being freely revolvable to enable the navigation apparatus main body part and the GPS antenna unit to be folded on these coupled bases. For example, a television receiver is configured by the following manner. It is configured by superposing and unifying a flat panel antenna main body and a thin-shaped tuner to form an antenna unit, by providing a base supporting the antenna unit to the antenna unit with elevation angle adjusting means put between them, by providing a foldable base to the television main body, by providing coupling means for coupling the base on the antenna unit side and the base on the television main body side to make the bases be freely attachable and detachable and be freely revolvable between the bases, and by making the television main body and the antenna unit be foldable on the coupled bases (see, for example, Japanese Patent Application Laid-Open Publication No. 6-98282).

However, because the display screen of the navigation apparatus disclosed in the Japanese Patent Application Laid-Open Publication No. 2005-134151 is disposed on both the apparatus main body and the cover, the navigation apparatus has a problem of the difficulty of seeing the display screen when the navigation apparatus is installed in a vehicle.

Moreover, because the navigation apparatus disclosed in the Japanese Patent Application Laid-Open Publication No. 9-145385 is provided with not only a revolving mechanism for revolving the implement body equipped with the input keys but also a GPS antenna revolving mechanism for improving the reception sensitivity of a GPS signal, the navigation apparatus has a problem of the high cost thereof owing to the plurality of revolving mechanisms.

Moreover, even if a navigation apparatus is configured as the television receiver disclosed in the Japanese Patent Application Laid-Open Publication No. 2005-217895, the GPS antenna thereof cannot protect the entire body of the display screen. Consequently, the navigation apparatus cannot fully solve the problem of damaging the display screen at the time of, for example, carrying the navigation apparatus housed in a bag or the like.

Moreover, because new members such as bases and coupling means become necessary when a navigation apparatus is configured as the television receiver disclosed in the Japanese Patent Application Laid-Open Publication No. 6-98282, the navigation apparatus has a problem of the high cost thereof, and because the folding method thereof is complicated, the navigation apparatus also has a problem of the inferiority of the operationality thereof.

### SUMMARY OF THE INVENTION

It is an object of the present invention to provide a low-cost and easily operatable navigation apparatus having a display screen that receives no damages when the navigation apparatus is carried and is easy to observe when the navigation apparatus is installed in a vehicle.

According to a first aspect of the present invention, there is provided a portable navigation apparatus which positions a current position to display the current position on a display section, the apparatus comprising:
an apparatus main body part in which the display section is disposed on a front side thereof;
a planate GPS antenna section which is provided at an upper end of the apparatus main body part so as to be freely revolvable to receive a GPS signal transmitted from a GPS satellite; and
an elevation angle adjusting mechanism which adjusts an elevation angle of the GPS antenna section, wherein
the GPS antenna section is configured to switch between a state in which an entire display screen of the display section is exposed and a state in which the entire display screen of the display section is covered, by revolving the GPS antenna section, and
the GPS antenna section is freely slidable in a front direction and in a back direction in a state of being substantially perpendicular to the display screen of the display section.

According to a second aspect of the present invention, there is provided a navigation apparatus which positions a current position to display the current position on a display section, the apparatus comprising:
an apparatus main body part in which the display section is disposed on a front side thereof; and
a planate GPS antenna section which is provided at an upper end of the apparatus main body part so as to be freely revolvable to receive a GPS signal transmitted from a GPS satellite, wherein
the GPS antenna section is configured to switch between a state in which an entire display screen of the display section is exposed and a state in which the entire display screen of the display section is covered, by revolving the GPS antenna section.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1A is a front view showing the state in which a GPS antenna section covers the entire body of a display screen in a navigation apparatus of the embodiment of the present invention;
FIG. 1B is a front view showing the state in which the GPS antenna section exposes the entire body of the display screen in a navigation apparatus of the embodiment of the present invention;
FIG. 2A is a side view showing the state in which the GPS antenna section covers the entire body of the display screen in a navigation apparatus of the embodiment of the present invention;
FIG. 2B is a side view showing a state in the process of the GPS antenna section of switching a state of covering the entire body of the display screen to a state of exposing the entire body of the display screen in a navigation apparatus of the embodiment of the present invention;
FIG. 2C is a side view showing the state in which the GPS antenna section exposes the entire body of the display screen in the navigation apparatus of the embodiment of the present invention;
FIG. 3A is a side view showing a state in which the GPS antenna section projects to the upper part of the front of the apparatus main body part in a navigation apparatus of the embodiment of the present invention;
FIG. 3B is a side view showing a state in the process of the GPS antenna section of switching a state of projecting to the upper part of the front to a state of projecting to the upper part of the back of the apparatus main body in a navigation apparatus of the embodiment of the present invention;
FIG. 3C is a side view showing a state in which the GPS antenna section projects to the upper part of the back of the apparatus main body in a navigation apparatus of the embodiment of the present invention;
FIG. 4A is an enlarged side view showing the neighborhood of an elevation angle adjusting mechanism in a state in which the GPS antenna section covers the entire body of the display screen; and
FIG. 4B is an enlarged side view showing the neighborhood of the elevation angle adjusting mechanism in a state in which the GPS antenna section exposes the entire body of the display screen.

### DETAILED DESCRIPTION OF THE PREFERRED EMBODIMENT

Hereinbelow, the preferred embodiment of a navigation apparatus according to the present invention will be described in detail with reference to the attached drawings. Incidentally, the scope of the present invention is not limited to the shown exemplary drawings.

### <Configuration of Navigation Apparatus>

A navigation apparatus 1 is, for example, a portable car navigation apparatus configured to be able to be later installed in a vehicle. The navigation apparatus 1 is installed on, for example, the dashboard of the vehicle, or is carried by a user, and is the apparatus to perform the following functions. That is, the navigation apparatus 1 positions the current position thereof to display the positioned current position on a display section 3. The navigation apparatus 1 retrieves, displays a route to a user's destination, and informs the user of the retrieved route.

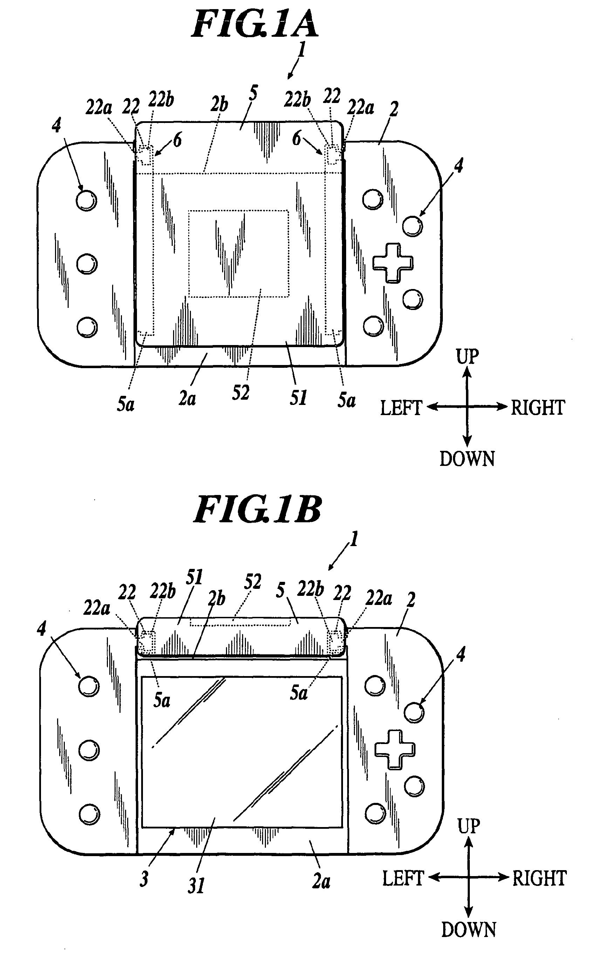

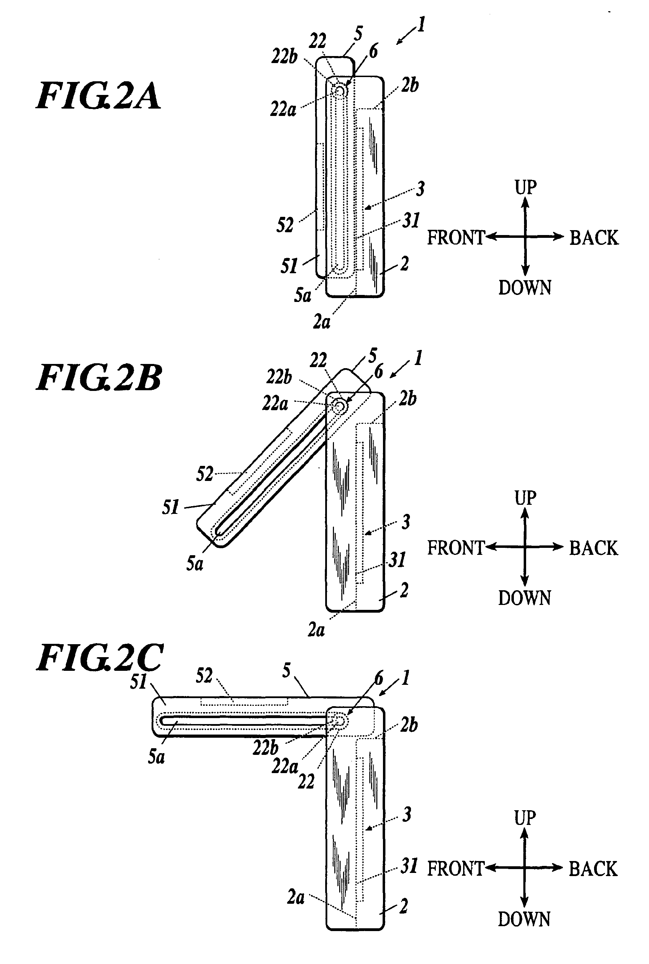

FIGS. 1A and 1B are front views of the navigation apparatus 1 of the embodiment of the present invention, and FIGS. 2A, 2B, 2C, 3A, 3B, 3C, 4A, and 4B are side views of the navigation apparatus 1 of the embodiment of the present invention.

Incidentally, in the following description, the side that a user sees at the time of using the navigation apparatus 1 (that is, the side on which the display section 3 is disposed) is the front side and the side opposed to the front side is the back side. One side of the navigation apparatus 1 which is the upper part when it is seen by the user is the upper side and the other side thereof which is the lower part when it is seen by the user is the lower side. The direction perpendicular to both of the front and back direction and the upper and lower direction is the right and left direction.

To put it concretely, the navigation apparatus 1 comprises an apparatus main body part 2 having an external form formed in, for example, a substantially rectangular parallelepiped having longer sides in the right and left direction, the display section 3 disposed in the neighborhood of the center on the front side of the apparatus main body part 2, an operation section 4 disposed on the right and left sides with the display section 3 put on the front side of the apparatus main body part 2 between the left side and the right side for the user's inputting of various instructions to the navigation apparatus 1, a planate GPS antenna section 5 provided at the upper end of the apparatus main body part 2 in the state of being freely revolvable, and the like.

At the center in the right and left direction on the front of the apparatus main body part 2, a first concave portion 2a formed by, for example, sinking the front to the back direction, is formed.

In the first concave portion 2a, for example, the display section 3 is disposed, and the display screen 31 of the display section 3 is exposed from, for example, the bottom face of the first concave portion 2a.

Moreover, at the upper end of the first concave portion 2a on the top face of the apparatus main body part 2, a second concave portion 2b formed by, for example, sinking the top face to the lower direction.

In the front of the bottom face of the first concave portion 2a on the side faces on the right and left sides of the second concave portion 2b, for example, substantially T-shaped projecting parts 22 and 22 are formed to project to the inner part.

Each of the projecting parts 22 comprises, for example, an shaft part 22a, a head part 22b provided at the end of the shaft part 22a and having a diameter larger than that of the shaft part 22a, and the like. The projecting parts 22 are engaged with, for example, groove portions 5a (which will be described later) formed in the GPS antenna section 5, to lock the GPS antenna section 5.

To put it concretely, for example, when the GPS antenna section 5 is positioned on the side of the display screen 31 (on the front side of the apparatus main body part 2), the GPS antenna section 5 is locked around the shaft center of the shaft part 22a (the shaft center in the right and left direction) in the state of being freely revolvable in the upper and lower direction. When the GPS antenna section 5 is positioned substantially perpendicular to the display screen 31, then the GPS antenna section 5 is locked in the state of being freely movable in the front and back direction.

The GPS antenna section 5 comprises, for example, a substantially rectangular frame body 51, an antenna main body 52 built in the frame body 51 to receive a GPS signal transmitted from a GPS satellite, a not-shown member (metal sheet or the like) built in the frame body 51 to improve the reception sensitivity of the antenna main body 52 to a GPS signal, and the like.

The antenna main body 52 is, for example, built in the frame body 51 so as to be disposed on the top face side of the GPS antenna section 5 in the state in which the GPS antenna section 5 is substantially perpendicular to the display screen 31.

The frame body 51 is, for example, formed in such a way that the length thereof in the right and left direction is slightly shorter than those of the first concave portion 2a and the second concave portion 2b of the apparatus main body part 2.

Consequently, the GPS antenna section 5 is made so that the back thereof (the surface opposed to the surface on which the antenna main body 52 is disposed) is housed in the first concave portion 2a, for example, in the state in which the GPS antenna section 5 covers the entire body of the display screen 31. Moreover, the GPS antenna section 5 is made so that the bottom thereof (the surface opposed to the surface on which the antenna main body 52 is disposed) is housed in the second concave portion 2b, for example, in the state in which the GPS antenna section 5 is substantially perpendicular to the display screen 31.

The substantially T-shaped groove portions 5a and 5a engaged with, for example, the projecting parts 22 of the apparatus main body part 2 are formed on the right and left side faces of the frame body 51 from slightly lower sides than the upper ends of the side faces to the slightly upper sides of the lower ends of the side faces in, for example, the state in which the GPS antenna section 5 covers the entire body of the display screen 31.

For example, when the GPS antenna section 5 is positioned on the side of the display screen 31 (the front side of the apparatus main body part 2), the GPS antenna section 5 is then freely revolvable in the upper and lower direction in the state in which the neighborhoods of the upper ends of the groove portions 5a in the state in which the GPS antenna section 5 covers the entire body of the display screen 31, and the projecting parts 22 of the apparatus main body part 2 mutually engage. For example, when the GPS antenna section 5 is positioned in the state of being substantially perpendicular to the display screen 31, the GPS antenna section 5 is freely slidable in the front and back direction in the state in which a part of the groove portions 5a and the projecting parts 22 of the apparatus main body part 2 mutually engage.

Here, for example, by the engagement of the projecting parts 22 of the apparatus main body part 2 with the neighborhoods of the upper ends of the groove portions 5a of the GPS antenna section 5 in the state in which the GPS antenna section 5 covers the entire body of the display screen 31, an elevation angle adjusting mechanism 6 adjusting the elevation angle of the GPS antenna section 5 is configured.

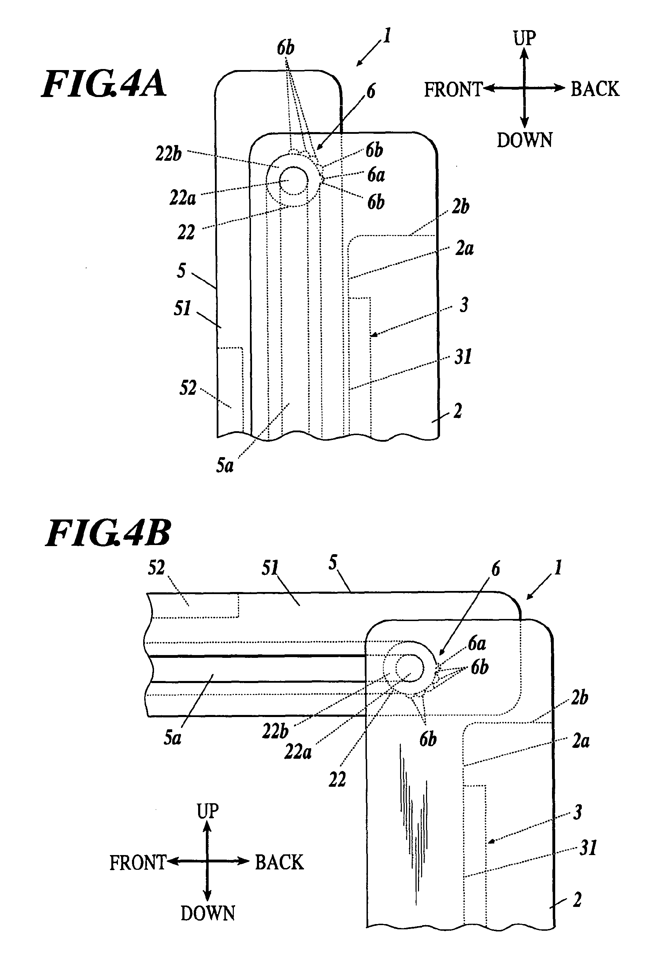

To put it concretely, for example, as shown in FIGS. 4A and 4B, a plurality of concave portions 6b are formed in each of the neighborhoods of the upper ends of the groove portions 5a along each of the circumferential directions of the groove portions 5a, and a projecting part 6a capable of engaging with the concave portions 6b is formed in the head part 22b of each of the projecting parts 22. The elevation angle adjusting mechanism 6 is composed of the projecting parts 6a and the plurality of concave portions 6b.

The elevation angle adjusting mechanism 6 holds, for example, the state in which the GPS antenna section 5 covers the entire body of the display screen 31 and the state in which the GPS antenna section 5 is substantially perpendicular to the display screen 31. When the elevation angle reaches a predetermined angle of the GPS antenna section 5 in the process of the GPS antenna section 5 revolving in the upper and lower direction, the elevation angle adjustment mechanism 6 holds the state.

### <Operation of GPS Antenna Section>

Next, the operation of the GPS antenna section 5 in the navigation apparatus 1 is described.

For example, when upward force is applied to the GPS antenna section 5 toward the front side in the state in which the GPS antenna section 5 covers the entire body of the display screen 31 (see, for example, FIGS. 1A and 2A), the GPS antenna section 5 revolves upward, switching the elevation angle thereof by several steps by the elevation angle adjusting mechanism 6 (see, for example, FIG. 2B). The GPS antenna section 5 is soon switched to the state of exposing the entire body of the display screen 31 (see, for example, FIGS. 1B, 2C, and 3A). The state of exposing the entire body of the display screen 31 is held by the elevation angle adjusting mechanism 6.

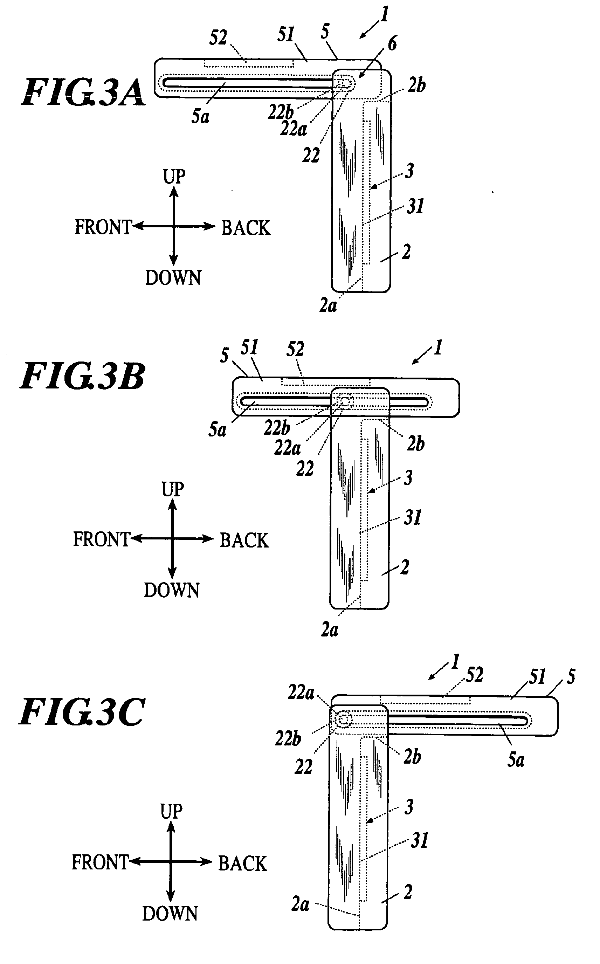

For example, when reverse force is applied to the GPS antenna section 5 in the state in which the GPS antenna section 5 exposes the entire body of the display screen 31 and projects to the upper part of the front of the apparatus main body part 2 (see, for example, FIGS. 1B, 2C, and 3A), the GPS antenna section 5 slides to the back direction (see, for example, FIG. 3 B), and the GPS antenna section 5 soon switches its state to the one in which the GPS antenna section 5 exposes the entire body of the display screen 31 and projects to the upper part of the back of the apparatus main body part 2 (see, for example, FIG. 3C).

Moreover, for example, when forward force is applied to the GPS antenna section 5 in the state in which the GPS antenna section 5 exposes the entire body of the display screen 31 and projects to the upper part of the back of the apparatus main body part 2 (see, for example, FIG. 3C), the GPS antenna section 5 slides forward (see, for example, FIG. 3B), and the GPS antenna section 5 soon switches its state to the one in which the GPS antenna section 5 exposes the entire body of the display screen 31 and projects to the upper part of the front of the apparatus main body part 2 (see, for example, FIGS. 1B, 2C, and 3A).

For example, when downward force is applied to the GPS antenna section 5 in the state in which the GPS antenna section 5 exposes the entire body of the display screen 31 (see, for example, FIGS. 1B, 2C, and 3A), the GPS antenna section 5 revolves downward, switching the elevation angle thereof by several steps by the elevation angle adjusting mechanism 6 (see, for example, FIG. 2B), and the GPS antenna section soon switches its state to the one in which the GPS antenna section 5 covers the entire body of the display screen 31 (see, for example, FIGS. 1A and 2A). The state of covering the entire body of the display screen 31 is held by the elevation angle adjusting mechanism 6.

The navigation apparatus 1 of the embodiment of the present invention described above comprises the apparatus main body part 2 which can position the current position thereof to display the positioned current position on the display section 3 which is disposed in the front side thereof, and the planate GPS antenna section 5 which is provided at the upper end of the apparatus main body part 2 in the state of being freely revolvable and receives a GPS signal transmitted from a GPS satellite, and the GPS antenna section 5 switches its state between the one exposing the entire body of the display screen 31 of the display section 3 and the one covering the entire body of the display screen 31 of the display section 3 by revolving.

That is, because the navigation apparatus 1 can improve the reception sensitivity of the GPS antenna section 5 to a GPS signal and can protect the display screen 31 of the display section 3 only by one revolving mechanism for revolving the GPS antenna section 5, the cost of the navigation apparatus is low.

Moreover, because the navigation apparatus 1 can switch the state of the GPS antenna section 5 between the one exposing the entire body of the display screen 31 and the one covering the entire body of the display screen only by revolving the GPS antenna section 5, the operationality of the navigation apparatus 1 is good.

Moreover, because the navigation apparatus 1 can cover the entire body of the display screen 31 with the planate GPS antenna section 5, the display screen 31 is not damaged when the navigation apparatus 1 is carried in the state of being housed in a bag or the like.

Moreover, because the display screen 31 is disposed only in the apparatus main body part 2, the display screen 31 can be easily observed when it is installed in a vehicle in comparison with the case where the display screen 31 is disposed in both of the apparatus main body part 2 and the cover section (for example, GPS antenna section 5).

Moreover, because the navigation apparatus 1 is equipped with the elevation angle adjusting mechanism 6 for adjusting the elevation angle of the GPS antenna section 5, the state of exposing the entire body of the display screen 31 and the state of covering the entire body of the display screen 31 can be held by the elevation angle adjusting mechanism 6.

Moreover, the GPS antenna section 5 is freely slidable in the front and back direction in the state in which the GPS antenna section 5 is substantially perpendicular to the display screen 31 of the display section 3.

That is, the GPS antenna section 5 is configured to switch its state between the one projecting to the upper part of the front (the surface on which the display screen 31 is disposed) of the apparatus main body part 2 and the one projecting to the upper part of the back of the apparatus main body part 2 by sliding.

Consequently, because the GPS antenna section 5 functions as a sunshade of the display screen 31 by switching its state to the one projecting to the upper part of the front of the apparatus main body part 2, it is possible to make the display screen 31 easier to see. Moreover, because the GPS antenna section 5 approaches the windshield of a vehicle when the navigation apparatus 1 is installed in the vehicle, by switching the state of the GPS antenna section 5 to the one projecting to the upper part of the back of the apparatus main body part 2, a GPS signal becomes easier to receive.

Incidentally, the present invention is not limited to the embodiment described above, and can be suitably modified without departing from the scope and sprit thereof.

To put it concretely, the shape of the navigation apparatus 1 and the configuration of the elevation angle adjusting mechanism 6, both of which have been illustrated in the embodiment, are examples of them, and they are not limited to the ones shown.

According to a first aspect of the preferred embodiments of the present invention, there is provided a portable navigation apparatus which positions a current position to display the current position on a display section, the apparatus comprising:
an apparatus main body part in which the display section is disposed on a front side thereof;
a planate GPS antenna section which is provided at an upper end of the apparatus main body part so as to be freely revolvable to receive a GPS signal transmitted from a GPS satellite; and
an elevation angle adjusting mechanism which adjusts an elevation angle of the GPS antenna section, wherein
the GPS antenna section is configured to switch between a state in which an entire display screen of the display section is exposed and a state in which the entire display screen of the display section is covered, by revolving the GPS antenna section, and the GPS antenna section is freely slidable in a front direction and in a back direction in a state of being substantially perpendicular to the display screen of the display section.

According to a first aspect of the present invention, a portable navigation apparatus comprises an apparatus main body part disposing a display section on a front side thereof, and a planate GPS antenna section provided at an upper end of the apparatus main body part in a state of being freely revolvable to receive a GPS signal transmitted from a GPS satellite, in which the GPS antenna section is configured to switch its states between one exposing an entire body of the display screen and one covering the entire body of the display screen by revolving.

That is, because it is possible to improve the reception sensitivity of a GPS signal in the GPS antenna section and to protect the display screen of the display section only by one revolving mechanism for revolving the GPS antenna section, the cost of the navigation apparatus is low.

Moreover, because it is possible to switch the states of the GPS antenna section between the one exposing the entire body of the display screen and the one covering the entire body of the display screen only by revolving the GPS antenna section, the navigation apparatus has good operationality.

Moreover, because it is possible to cover the entire body of the display screen with the planate GPS antenna section, the display screen is not damaged when the navigation apparatus is carried in a bag or the like.

Moreover, because the display screen is disposed only in the apparatus main body part, the display screen is easy to see when the navigation apparatus is installed in a vehicle in comparison with the case where the display screen is disposed in both of the apparatus main body part and a cover section (for example, GPS antenna section).

Moreover, because the navigation apparatus comprises an elevation angle adjusting mechanism adjusting the elevation angle of the GPS antenna section, the state of exposing the entire body of the display screen and the state of covering the entire body of the display screen can be held by the elevation angle adjusting mechanism.

Moreover, the GPS antenna section is freely slidable in the front and back direction in the state of being substantially perpendicular to the display screen of the display section.

That is, the GPS antenna section is configured to switch its states between the one projecting to the upper part of the front (the surface on which the display screen is disposed) of the apparatus main body part and the one projecting to the upper part of the back of the apparatus main body part by sliding.

Consequently, because the GPS antenna section functions as a sunshade of the display screen by switching its state to the one projecting to the upper part of the front of the apparatus main body part, it is possible to make the display screen easier to see. Moreover, because the GPS antenna apparatus section approaches the windshield of a vehicle by switching its state to the one projecting to the upper part of the back when the navigation apparatus is installed in the vehicle, it becomes easier to receive a GPS signal.

According to a second aspect of the preferred embodiments of the present invention, there is provided a navigation apparatus which positions a current position to display the current position on a display section, the apparatus comprising:
an apparatus main body part in which the display section is disposed on a front side thereof; and
a planate GPS antenna section which is provided at an upper end of the apparatus main body part so as to be freely revolvable to receive a GPS signal transmitted from a GPS satellite, wherein
the GPS antenna section is configured to switch between a state in which an entire display screen of the display section is exposed and a state in which the entire display screen of the display section is covered, by revolving the GPS antenna section.

According to a second aspect of the invention, the navigation apparatus comprises an apparatus main body part disposing a display section on a front side thereof, and a planate GPS antenna section provided at an upper end of the apparatus main body part in a state of being freely revolvable to receive a GPS signal transmitted from a GPS satellite, in which the GPS antenna section is configured to switch its states between one exposing an entire display screen of the display section and one covering the entire display screen of the display section by revolving.

That is, because it is possible to improve the reception sensitivity of a GPS signal in the GPS antenna section and to protect the display screen of the display section only by one revolving mechanism for revolving the GPS antenna section, the cost of the navigation apparatus is low.

Moreover, because it is possible to switch the states of the GPS antenna section between the one exposing the entire body of the display screen and the one covering the entire body of the display screen only by revolving the GPS antenna section, the navigation apparatus has good operationality.

Moreover, because it is possible to cover the entire body of the display screen with the planate GPS antenna section, the display screen is not damaged when the navigation apparatus is carried in a bag or the like.

Moreover, because the display screen is disposed only in the apparatus main body part, the display screen is easy to see when the navigation apparatus is installed in a vehicle in comparison with the case where the display screen is disposed in both of the apparatus main body part and a cover section (GPS antenna section).

Preferably, the navigation apparatus further comprises an elevation angle adjusting mechanism which adjusts an elevation angle of the GPS antenna section.

According to a third aspect of the invention, because the navigation apparatus includes an elevation angle adjusting mechanism adjusting the elevation angle of the GPS antenna section, the state of exposing the entire body of the display screen and the state of covering the entire body of the display screen can be held by the elevation angle adjusting mechanism.

Preferably, the GPS antenna section is freely slidable in a front direction and in a back direction in a state of being substantially perpendicular to the display screen of the display section.

According to a fourth aspect of the invention, the GPS antenna section is freely slidable in the front and back direction in the state of being substantially perpendicular to the display screen of the display section.

That is, the GPS antenna section is configured to switch its state between the one projecting to the upper part of the front (the surface on which the display screen is disposed) of the apparatus main body part and the one projecting to the upper part of the back of the apparatus main body part by sliding.

Consequently, because the GPS antenna section functions as a sunshade of the display screen by switching its state to the one projecting to the upper part of the front of the apparatus main body part, it is possible to make the display screen easier to see. Moreover, because the GPS antenna apparatus section approaches the windshield of a vehicle by switching its state to the one projecting to the upper part of the back when the navigation apparatus is installed in the vehicle, it becomes easier to receive a GPS signal.

The entire disclosure of Japanese Patent Application No. 2006-284164 filed on October 18, 2006 including description, claims, drawings, and abstract are incorporated herein by reference in its entirety.

Although various exemplary embodiments have been shown and described, the invention is not limited to the embodiments shown. Therefore, the scope of the invention is intended to be limited solely by the scope of the claims that follow.

## Claims

1. A portable navigation apparatus which positions a current position to display the current position on a display section, the apparatus comprising:
an apparatus main body part in which the display section is disposed on a front side thereof;
a planate GPS antenna section which is provided at an upper end of the apparatus main body part so as to be freely revolvable to receive a GPS signal transmitted from a GPS satellite; and
an elevation angle adjusting mechanism which adjusts an elevation angle of the GPS antenna section, wherein
the GPS antenna section is configured to switch between a state in which an entire display screen of the display section is exposed and a state in which the entire display screen of the display section is covered, by revolving the GPS antenna section, and
the GPS antenna section is freely slidable in a front direction and in a back direction in a state of being substantially perpendicular to the display screen of the display section.

2. A navigation apparatus which positions a current position to display the current position on a display section, the apparatus comprising:
an apparatus main body part in which the display section is disposed on a front side thereof; and
a planate GPS antenna section which is provided at an upper end of the apparatus main body part so as to be freely revolvable to receive a GPS signal transmitted from a GPS satellite, wherein
the GPS antenna section is configured to switch between a state in which an entire display screen of the display section is exposed and a state in which the entire display screen of the display section is covered, by revolving the GPS antenna section.

3. The navigation apparatus according to claim 2, further comprising an elevation angle adjusting mechanism which adjusts an elevation angle of the GPS antenna section.

4. The navigation apparatus according to claim 2 or 3, wherein the GPS antenna section is freely slidable in a front direction and in a back direction in a state of being substantially perpendicular to the display screen of the display section.
